(19) Europäisches Patentamt
European Patent Office
Office européen des brevets

(11) Veröffentlichungsnummer: **0 070 542**
**B1**

(12) **EUROPÄISCHE PATENTSCHRIFT**

(45) Veröffentlichungstag der Patentschrift: **03.10.84**

(51) Int. Cl.³: **C 01 B 11/02**

(21) Anmeldenummer: **82106433.4**

(22) Anmeldetag: **16.07.82**

# (54) Verfahren und Vorrichtung zur Herstellung von Chlordioxid.

(30) Priorität: **21.07.81 DE 3128817**

(43) Veröffentlichungstag der Anmeldung: **26.01.83 Patentblatt 83/4**

(45) Bekanntmachung des Hinweises auf die Patenterteilung: **03.10.84 Patentblatt 84/40**

(84) Benannte Vertragsstaaten: **AT DE SE**

(56) Entgegenhaltungen:
**EP - A - 0 018 670**
**NL - A - 6 906 359**
**US - A - 4 137 296**

**CHEMICAL ABSTRACTS, Band 90, Nr. 26, Juni 1979, Seite 163, linke Spalte, Nr. 206700v, Columbus, Ohio, (USA)**
**CHEMICAL ABSTRACTS, Band 63, September 1965, Spalte 11060a, Columbus, Ohio, (USA), L.F. GVARDINA: "Unit for the production of chlorine dioxide"**

(73) Patentinhaber: **Dipl. Ing. Hanns Fröhler KG, Walchstadter Strasse 45, D-8021 Icking (DE)**

(72) Erfinder: **Fröhler, Hanns, Walchstadter Strasse 45, D-8021 Icking (DE)**
Erfinder: **Rossberger, Erwin, Dr., Jettenhausnerstrasse 2, D-8021 Grossdingharting (DE)**

(74) Vertreter: **Weickmann, Heinrich, Dipl.-Ing. et al, Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820, D-8000 München 86 (DE)**

*Anmerkung:* Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft ein Verfahren und eine Vorrichtung zur Herstellung von Chlordioxid, insbesondere aus Chlor als Rohstoff.

Seit über 30 Jahren ist das sogenannte Münchner Verfahren (Kesting, DE-C Nrn. 831542, 924689, 971285) bekannt, nach welchem Chlordioxid besonders umweltfreundlich und ohne Abfallstoffe in grossem Umfang hergestellt wird. Danach wird eine durch Elektrolyse von Natriumchloridlösung erzeugte Chloratlösung gemäss der Gleichung 1

$$NaCl + 3\ H_2O \rightarrow NaClO_3 + 3\ H_2 \qquad (1)$$

mit Salzsäure in einer 5- bis 6bödigen Kaskadenkolonne, gemäss Gleichung 2

$$NaClO_3 + 2\ HCl \rightarrow ClO_2 + \tfrac{1}{2}\ Cl_2 + NaCl + H_2O \qquad (2)$$

zu Chlordioxid und Chlor umgesetzt, wobei sich durch Einhaltung definierter Bedingungen die unerwünschte Nebenreaktion gemäss der Gleichung 3

$$NaClO_3 + 6\ HCl \rightarrow 3\ Cl_2 + NaCl + 3\ H_2O \qquad (3)$$

weitgehend unterdrücken lässt. Die aus der Reaktionskolonne abfliessende Lösung wird in die Chloratelektrolyseanlage ohne jede weitere Behandlung zurückgeführt. Aus dem nach den Gleichungen 2 und 3 erhaltenen und mit Luft verdünntem Gasgemisch wird Chlordioxid durch Absorption in kaltem Wasser, zusammen mit gelöstem Chlor, in der Trennkolonne gewonnen und diese Chlordioxidlösungen z.B. der Zellstoffbleiche zugeführt.

Die Verdünnung des in der Reaktionskolonne entsprechender Gleichungen 2 und 3 erzeugten Gasgemisches ist aus Sicherheitsgründen notwendig, damit der Partialdruck des Chlordioxids 0,15 bar nicht wesentlich übersteigt. Oberhalb dieses Druckes wird die Gasmischung zunehmend instabil, insbesondere bei Temperaturerhöhung, und sie kann dabei explosionsartig zerfallen. Bis zu diesem Partialdruck ist auch die bei einer eventuellen Zersetzung des Chlordioxids freiwerdende Wärmemenge niedrig genug, um keine destruktiven Störungen des Prozessablaufes und der Anlage hervorzurufen. Dies gilt besonders dann, wenn das Verfahren in einem Kaskadenreaktor durchgeführt wird, weil hierbei die Gasräume voneinander getrennt sind.

Die Hauptmenge des in der Reaktionskolonne bzw. dem Kaskadenreaktor nach den Gleichungen 2 und 3 gebildeten internen Chlors wird nach Durchgang durch eine Trennkolonne – zusammen mit der Verdünnungsluft – in einem Salzsäure-Syntheseofen mit dem nach der Gleichung 1 erzeugten Elektrolysewasserstoff zu HCl umgesetzt. Der in der Verdünnungsluft enthaltene Sauerstoff verbraucht dabei weitgehend den Elektrolysewasserstoff unter Bildung von Wasser.

Die Gesamtreaktion des Münchner Verfahrens lässt sich dementsprechend beschreiben durch die vereinfachte Formulierung gemäss Gleichung 4

$$HCl + 2\ O_{Elektrolyse} \rightarrow ClO_2 + \tfrac{1}{2}\ H_2 \qquad (4)$$

Unter den Bedingungen der Praxis ergibt sich jedoch – wegen $H_2$-verbrauchender Nebenreaktionen und wegen des zusammen mit dem $ClO_2$ ausgetragenen Chlors – ein geringerer Wasserstoffüberschuss.

Entsprechend Gleichung 4 wird als Rohstoff zur Chlordioxidherstellung nach dem Münchner Verfahren lediglich Salzsäure (und Absorptionswasser) benötigt. Diese Verfahrensweise ist üblich und angebracht, wenn HCl leicht verfügbar ist.

In Zellstofferzeugungsanlagen steht mitunter Chlor leichter zur Verfügung als Salzsäure. Man muss dann in einer separaten Syntheseanlage die Salzsäure aus $Cl_2$ und $H_2$, welche z.B. mit einer Chloralkalielektrolyseanlage gewonnen werden, herstellen.

Wenn also $Cl_2$ ökonomisch günstiger als HCl bereitgestellt werden kann, sollte der primär – nach der Gleichung 1 – in der Chloratelektrolyse erzeugte Wasserstoff besser genutzt werden, entsprechend der vereinfachten Formulierung nach der Gleichung 5

$$\tfrac{1}{2}\ Cl_2 + 2\ O_{Elektrolyse} \rightarrow ClO_2 \qquad (5)$$

Dies wird in einem bekannten Verfahren (EP-A Nr. 0018670, Metallgesellschaft) dadurch erreicht, dass der in den Reaktor eingeführte Luftstrom wenigstens teilweise durch einen Chlorgasstrom ersetzt wird. Man bemisst dabei die eingeführte Chlorgasmenge so, dass sie zur Deckung des Chlorwasserstoffbedarfes der Reaktionen 2 und 3 ausreicht.

Das extern eingeführte Chlorgas kann bei diesem Verfahren nicht direkt in den HCl-Ofen, zusammen mit dem aus der Trennkolonne entweichenden, internen Chlorgas, zugeführt werden, da wegen der zur Verdünnung des $ClO_2$ benötigten Luftmenge (um einen Partialdruck von maximum 0,15 bar im $ClO_2$-Reaktor zu erreichen) die in der Elektrolyse gebildete Wasserstoffmenge zur Verbrennung nicht ausreicht. Das externe Chlorgas muss in den Reaktor eingeführt werden um die Menge an Verdünnungsluft zu vermindern. Dann enthält das bei diesem Verfahren aus dem Reaktor austretende Gasgemisch etwa doppelt soviel Chlor als Chlordioxid, wodurch die Trennung der Komponenten des Gasgemisches in der Trennkolonne beeinträchtigt wird und der aus der Trennkolonne mit dem $Cl_2$ ausgetragene $ClO_2$-Anteil sich entsprechend erhöht. Der ebenfalls höhere Chlorgehalt im Chlordioxidwasser ist bei der Zellstoffbleiche sehr unerwünscht, da er lösliche chlorierte Produkte ergibt, die die Abwasserprobleme verschärfen.

Nach einem anderen bekannten Verfahren (CA-A Nr. 1049950) wird der Prozess in einem Chlordioxidgenerator ohne Lufteinspeisung unter vermindertem Druck durchgeführt, also in einem Einzelreaktor ohne internes Temperaturgefälle. Das erzeugte Gasgemisch enthält Chlordioxid, Chlor und Wasserdampf und es ist luftfrei. Es wird krist. NaCl beim Eindampfen der Lösung im Vakuum ausgefällt, welches durch einen eigenen Separierungsschritt abgetrennt, gewaschen und nach Lösung in Wasser der Chloratelektrolyseanlage zugeführt wird. Diese umständliche Arbeitsweise ist deshalb notwendig, weil bei direkter Zurückführung der Reaktionslösung aus dem Chlordioxidgenerator *(single vessel)* zuviel nicht abreagierte Salzsäure in die Chloratelektrolyse eingebracht wird, wo sie gefährlich hohe Chlorkonzentrationen im Wasserstoff (Chlorknallgas) bewirken würde, es sei denn, man neutralisiert diese nicht unerheblichen Mengen Salzsäure durch (teure) Natronlauge und verwirft die hierbei gebildete Kochsalzmenge. Im Einzelreaktor verbleiben nämlich bei der normalen Fahrweise bei ca. 60°C etwa 40 bis 60 g HCl/l Reaktionslösung zurück, bei noch tieferen Reaktionstemperaturen ist der HCl-Anteil entsprechend höher. Führt man die $ClO_2$-Erzeugung in einem Einzelreaktor bei höherer Temperatur, also 60 bis 100°C durch, so vermindert sich die Ausbeute nach der Gleichung 2 und die unerwünschte Reaktion 3 nimmt zu. Der Ausfall von Salz im Einzelreaktor kann ausserdem zu Verstopfungen am Auslass führen, woraus sich ein erhöhtes Risiko für Zersetzungen ergibt. Sehr riskant ist auch die Einspeisung von HCl-Gas in den Chlordioxidgenerator direkt aus der HCl-Anlage, weil das Mitschleppen von Überschusswasserstoff nicht zu vermeiden ist, wodurch sich erhebliche Explosionsgefahren ergeben.

Die Erfindung liegt deshalb die Aufgabe zugrunde, ein Verfahren und eine Vorrichtung zur kontinuierlichen Herstellung von Chlordioxid zu schaffen, welche die wahlweise Verwendung von Chlor – wie z.B. aus Flüssigchlor oder als Abfallchlor – anstelle von Salzsäure ohne die geschilderten Nachteile und ohne erheblichen apparativen Aufwand gestattet.

Diese Aufgabe wird erfindungsgemäss gelöst durch ein Verfahren zur kontinuierlichen Herstellung von Chlordioxid in einem Kaskadenreaktor durch Reaktion von Salzsäure mit Alkalichloratlösung, welche vermittels einer Elektrolyseanlage aus einer im Verfahren zirkulierenden, Alkalichlorid enthaltenden Chloratlösung zusammen mit kathodisch gebildetem Wasserstoff erhalten wird unter Zuleitung von Luft und Umsetzung des aus dem Reaktionsprodukt abgetrennten Chlorgases mit dem kathodisch gebildeten Wasserstoff zu Salzsäure, welches dadurch gekennzeichnet ist, dass man am Ausgang des Kaskadenreaktors einen Unterdruck von 0,2 bis 0,3 bar einstellt und externes Chlorgas zur Erzielung der benötigten Menge Salzsäure direkt in die Salzsäuresynthese zuführt.

Für die Anwendung des erfindungsgemässen Verfahrens ist ein Kaskadenreaktor notwendig, bei dem die Temperaturen auf den 5 und 6 Böden stufenweise bis zur Siedetemperatur der ausreagierten Mischung ansteigen entsprechend

30-35°C über dem 1. Boden
48-52°C über dem 2. Boden
65-72°C über dem 3. Boden
78-82°C über dem 4. Boden
Siedepunkt 5. und 6. Böden

Dadurch wird erreicht, dass das Chlordioxid seine höchste Konzentration über dem 1. Boden, also bei relativ niedriger Temperatur aufweist. Man erhält damit optimale Ausbeuten an $ClO_2$; ausserdem kann die Gefahr einer destruktiven Zersetzung des Chlordioxids, wie sie bei höheren Temperaturen in einem Einzelreaktor besteht, völlig ausgeschlossen werden.

Die Zufuhr von Luft erfolgt zweckmässigerweise auf dem 4. Boden des Kaskadenreaktors und analog die Einstellung des verminderten Druckes. Die 5. und 6. Böden befinden sich dagegen bei Normaldruck, wodurch – unabhängig von Vakuum auf den Böden 1 bis 4, ein Siedepunkt von 105 bis 110°C erreicht wird und die Restsalzsäure auf einen Gehalt von 2 bis 4 g/l in der ausreagierten Lösung gebracht wird. Diese ist vollkommen feststoffrei und wird direkt in die Chloratelektrolyseanlage eingespeist. Ihr HCl-Gehalt reicht gerade aus, um den pH auf den Sollbereich von 6,2 bis 6,6 zu halten. Der von den Böden 5 und 6 austretende Brüden wird über einen Kondensator geleitet, wodurch der durch die konz. HCl eingebrachte Wasseranteil z.T. ausgetragen wird; das verbleibende Reaktionsgas aus Chlor, Chlordioxid und Wasserdampf tritt, gemischt mit Luft, in Boden 4 ein.

Gemäss einer bevorzugten Ausführungsform der Erfindung wird die in den Kaskadenreaktor eingeführte Luftmenge auf den Chlordioxidproduktstrom abgestimmt derart, dass sie dem 2,3- bis 3,2fachen des als Volumenstrom berechneten Chlordioxidstromes entspricht. Damit gelingt es in einfacher Weise und ohne erheblichen regeltechnischen Aufwand, den Prozess der $ClO_2$-Erzeugung im Kaskadenreaktor immer im sicheren Bereich unterhalb des Partialdruckes von 0,15 bar zu betreiben und andererseits im HCl-Syntheseofen für einen genügend grossen Wasserstoffüberschuss von minimum 10% zu sorgen, der u.a. zur Vermeidung von Korrosionen und Materialverschleiss notwendig ist. Der Wasserstoffüberschuss muss auch aus verfahrens- und sicherheitstechnischen Gründen gross genug sein, um Schwankungen im Prozessablauf kompensieren zu können, z.B. bei stärkerer Verdünnung des Chlordioxid-Reaktionsgases aus dem Kaskadenreaktor, etwa auf einen Partialdruck von 0,13 bis 0,14 bar.

Der Kaskadenreaktor kann ohne erheblichen Aufwand bis zu einem Unterdruck von 0,3 bar über dem 1. Boden ausgelegt werden. Ein grösserer Unterdruck würde einer verstärkten Konstruktion bedürfen, die wegen des höheren Materialaufwandes, insbesondere an Titan, eine beachtliche Steigerung der Anschaffungskosten zur Folge hätte.

Für die Druckregelung hat es sich bewährt, am Produktausgang der Trennkolonne eine Pumpe zur Erzeugung des Unterdrucks anzuordnen und die jeweilige Arbeitsdruckhöhe durch Regelung des Luftzutritts in den Reaktor einzustellen, was beispielsweise ein entsprechendes Ventil in der Luftzufuhrleitung, welches durch den Arbeitsdruck am Ausgang des Reaktors gesteuert wird, erfolgen kann. Als Verdünnungsluft für den Reaktor wird vorzugsweise die aus dem Chlordioxidlagerbehälter abgesaugte Spülluft verwendet. Die

Menge des extern zugefügten Chlorvolumens kann dann ihrerseits in Abhängigkeit von dem aus der Anlage entnommenen $ClO_2$-Menge geregelt werden.

Neben Luft und HCl wird dem Kaskadenreaktor die Alkalichloratlösung direkt von der Elektrolyse zugeführt, zweckmässig nach Abfiltrieren von unlöslichen Niederschlägen. Als Alkali wird Natrium bevorzugt.

Wenn die oben geschilderten bevorzugten Bedingungen eingehalten werden, so benötigt man für das Verfahren lediglich von aussen zugeführtes (externes) Chlor, ausserdem Absorptionswasser für $ClO_2$.

Ein weiterer Gegenstand der Erfindung ist eine Vorrichtung zur Durchführung des erfindungsgemässen Verfahrens, enthaltend wenigstens eine Chloratelektrolyseanlage 1, einen Kaskadenreaktor 2, eine Trennkolonne 3 und einen Salzsäuresyntheseofen 4, welche der Verfahrensführung entsprechend durch Leitungen miteinander verbunden sind, welche gekennzeichnet ist durch ein Ventil 5 in der Luftzufuhrleitung des Reaktors 2, welches entsprechend dem Druck am Produktausgang des Reaktors geregelt ist.

Wie bereits erwähnt, weist der Kaskadenreaktor vorzugsweise 5 und 6 Böden auf, wobei die Luftzufuhrleitung mit dem vierten Boden verbunden ist und die Auslassleitung für den lufthaltigen Produktstrom über dem ersten Boden angeordnet ist.

Das erfindungsgemässe Verfahren und die zu seiner Durchführung verwendete Vorrichtung wird anhand der beigefügten Zeichnung im folgenden näher erläutert:

In einer Chloratelektrolyseanlage 1 wird Alkalichlorat und Wasserstoff gemäss der Gleichung 1 erzeugt. Die Chloratlösung wird über die Leitung 9 in den obersten Reaktionsraum eines beispielsweise 6bödigen Kaskadenreaktors 2 dosiert und dort mit konz. Salzsäure, welche über die Leitung 10 zugeführt wird, zum Umsatz gebracht. Die aus dem untersten Boden des Reaktors ablaufende verarmte Chloratlösung fliesst in die Elektrolyseanlage 1 über Leitung 17 zurück.

In den Gasraum des 4. Bodens des Reaktors wird über ein Regelventil 5 Verdünnungsluft eingesaugt, welche sich mit dem Brüden von Boden 5 und 6 vermischt und die oberen Böden des Reaktors durchströmt. Die aus dem Reaktor 2 bei einem Unterdruck von 0,2 bis 0,3 bar austretende Gasmischung, welche aus $ClO_2$, $Cl_2$ Wasserdampf und Verdünnungsluft besteht, wird über die Leitung 15 in die Trennkolonne 3 geführt und dort mit Absorptionswasser aus Leitung 13 in Lösung gebracht, welche über 14 in den Vorratstank 7 fliesst. Das nicht absorbierte Restgasgemisch, welches neben der Verdünnungsluft vorwiegend Chlor enthält, gelangt vermittels der Gaspumpe 6 unter Zusatz von extern bereitgestelltem Chlor, welches über das Regelventil 8 zugeführt wird, in den Syntheseofen 4. Dort wird es mit dem aus der Elektrolyseanlage 1 über 11 zugeleitetem Wasserstoff zu HCl und $H_2O$ verbrannt, welche unter Zufügung von weiterem Absorptionswasser (über 16) als konz. HCl entnommen werden.

Erfindungsgemäss ist es möglich, ohne grösseren apparativen Aufwand die Chlordioxidherstellung durch die Zufuhr von Chlor, wie z.B. aus Flüssigchlor oder Abfallchlorgas anstelle von Salzsäure, zu erreichen, ohne die bei den bekannten Verfahren auftretenden oben beschriebenen Nachteile.

*Ausführungsbeispiel*

In einer Anlage mit einer Kapazität von 7,5 tato Chlordioxid werden aus der Chloratelektrolyse bei 95,6% Stromausbeute und einer Stromaufnahme von 885 kA stündlich ca. 353 $Nm^3$ verwertbarer Wasserstoff gewonnen. Im Kaskadenreaktor werden stündlich 560 kg $NaClO_3$ und 460 kg HCl zu 320 kg Chlordioxid und 280 kg Chlor umgesetzt, die mit mind. 475 $Nm^3$ Luft verdünnt werden müssen, um 15% $ClO_2$-Gehalt im wasserdampfgesättigten Gasgemisch nicht zu überschreiten. Das aus der Trennkolonne abgezogene Gas, welches noch 245 kg Chlor und 7 kg Chlordioxid neben der Verdünnungsluft enthält, verbraucht 281 $Nm^3$ Wasserstoff. Da der HCl-Ofen unter reduzierenden Bedingungen betrieben werden muss und aus verfahrenstechnischen Gründen ein Wasserstoffüberschuss bezogen auf den Reststickstoffgehalt der Luft notwendig ist, wird der verwertbare Wasserstoff bei dieser Arbeitsweise praktisch vollständig benötigt.

Verfährt man jedoch entsprechend der Erfindung, so werden beispielsweise bei 0,2 bar Unterdruck über dem 1. Reaktorboden nur noch 331 $Nm^3$ Verdünnungsluft benötigt, um einen Partialdruck des Chlordioxides von 0,15 bar in der Reaktionsgasmischung nicht überschreiten zu lassen. Dadurch wird es möglich, im HCl-Syntheseofen zusätzlich mind. 202,2 kg Chlor, welches extern als Gas zugeführt wird, mitzuverbrennen. Mit dieser Chlormenge wird der gesamte Eigenbedarf an HCl für den Umsatz zu Chlordioxid aus dem Elektrolysewasserstoff bestritten. Ohne die Lehre der Erfindung musste bislang die für den Prozess benötigte Salzsäure in einem gesonderten HCl-Syntheseofen erzeugt werden, beispielsweise aus $H_2$ und $Cl_2$, welche aus einer Chloralkalielektrolyse stammen.

## Patentansprüche

1. Verfahren zur kontinuierlichen Herstellung von Chlordioxid in einem Kaskadenreaktor durch Reaktion von Salzsäure mit Alkalichloratlösung, welche vermittels einer Elektrolyseanlage aus einer im Verfahren zirkulierenden, Alkalichlorid enthaltenden Chloratlösung zusammen mit kathodisch gebildetem Wasserstoff erhalten wird unter Zuleitung von Luft und Umsetzung des aus dem Reaktionsprodukt abgetrennten Chlorgases mit dem kathodisch gebildeten Wasserstoff zu Salzsäure, dadurch gekennzeichnet, dass man am Ausgang des Kaskadenreaktors einen Unterdruck von 0,2 bis 0,3 bar einstellt und externes Chlorgas zur

Erzielung der benötigten Menge Salzsäure direkt in die Salzsäuresynthese zuführt.

2. Verfahren nach Anspruch 1, dadurch gekennzeichnet, dass man in den Kaskadenreaktor einen Luftstrom einführt, der dem 2,3- bis 3,2fachen des als Volumenstrom berechneten Chlordioxidproduktstroms entspricht.

3. Verfahren nach einem der vorhergehenden Ansprüche, dadurch gekennzeichnet, dass der Luftstrom in den Kaskadenreaktor ganz oder teilweise mit der aus den Chlordioxidlagerbehältern abgesaugten Spülluft gespeist wird.

4. Verfahren nach einem der vorhergehenden Ansprüche, dadurch gekennzeichnet, dass der Arbeitsdruck am Ausgang des Kaskadenreaktors durch Regelung der Luftzufuhr zum Reaktor eingestellt wird.

5. Verfahren nach einem der vorhergehenden Ansprüche, dadurch gekennzeichnet, dass man die in die Salzsäuresynthese einzuspeisende Chlormenge in Abhängigkeit von der aus der Chlordioxiderzeugungsanlage entnommenen Chlordioxidmenge regelt.

6. Vorrichtung zur Durchführung des Verfahrens nach den Ansprüchen 1 bis 5, enthaltend wenigstens eine Chloratelektrolyseanlage (1), einen Kaskadenreaktor (2), eine Trennkolonne (3) und einen Salzsäuresyntheseofen (4), welche der Verfahrensführung entsprechend durch Leitungen miteinander verbunden sind, gekennzeichnet durch ein Ventil (5) in der Luftzufuhrleitung des Reaktors (2), welches entsprechend dem Druck am Produktausgang des Reaktors regelbar ist.

7. Vorrichtung nach Anspruch 6, gekennzeichnet durch ein Ventil (8) in der Zufuhrleitung für externes Chlor zum Syntheseofen (4), welches die Chlorzufuhr in Abhängigkeit von dem in den Reaktor (2) eingeleiteten Luftstrom regelt.

8. Vorrichtung nach einem der Ansprüche 6 oder 7, dadurch gekennzeichnet, dass der Kaskadenreaktor 5 und 6 Böden aufweist, die Luftzufuhrleitung mit dem vierten Boden verbunden ist und die Auslassleitung für den lufthaltigen Produktstrom über dem ersten Boden angebracht ist.

## Revendications

1. Procédé de préparation en continu de dioxyde de chlore dans un réacteur en cascade par réaction d'acide chlorhydrique avec une solution de chlorate alcalin, laquelle est obtenue au moyen d'un dispositif d'électrolyse destiné à une solution de chlorate contenant du chlorure alcalin, circulant pendant le procédé, ainsi que de l'hydrogène formé à la cathode en amenant de l'air et en transformant, en acide chlorhydrique, du chlore gazeux séparé du produit de réaction avec l'hydrogène formé à la cathode, caractérisé en ce que, à la sortie du réacteur en cascade, on fixe une dépression de 0,2 à 0,3 bar et en ce qu'on introduit directement dans la synthèse de l'acide chlorhydrique du chlore gazeux externe pour obtenir la quantité nécessaire d'acide chlorhydrique.

2. Procédé selon la revendication 1, caractérisé en ce qu'on introduit dans le réacteur en cascade un courant d'air qui correspond de 2,3 à 3,2 fois au courant de produit de dioxyde de chlore mesuré en courant de volume.

3. Procédé selon l'une quelconque des revendications précédentes, caractérisé en ce que le courant d'air est introduit dans le réacteur en cascade totalement ou en partie avec l'air de lavage soutiré des récipients du système de dioxyde de chlore.

4. Procédé selon l'une quelconque des revendications précédentes, caractérisé en ce que la pression de travail est fixée à la sortie du réacteur en cascade par réglage de l'arrivée de l'air dans le réacteur.

5. Procédé selon l'une quelconque des revendications précédentes, caractérisé en ce qu'on règle dans la synthèse de l'acide chlorhydrique la quantité de chlore à introduire en fonction de la quantité de dioxyde de chlore provenant du dispositif de production de dioxyde de chlore.

6. Installation pour conduire le procédé selon les revendications 1 à 5, comprenant au moins un dispositif d'électrolyse de chlorate (1), un réacteur en cascade (2), une colonne de séparation (3) et un four de synthèse de l'acide chlorhydrique (4), lesquels sont liés dans la mise en œuvre du procédé par des conduites, caractérisée par une soupape (5) dans la conduite d'arrivée d'air dans le réacteur (2), laquelle est réglable en fonction de la pression à la sortie du produit du réacteur.

7. Dispositif selon la revendication 6, caractérisé par une soupape (8) dans la conduite d'arrivée du chlore externe au four de synthèse (4), lequel règle l'arrivée du chlore en fonction du courant d'air introduit dans le réacteur (2).

8. Dispositif selon l'une quelconque des revendications 6 ou 7, caractérisé en ce que le réacteur en cascade présente 5 et 6 planchers et en ce que la conduite d'arrivée du gaz est liée avec le quatrième plancher et en ce que la conduite d'évacuation du courant de produits contenant l'air est amenée au-dessus du premier plancher.

## Claims

1. Process for the continuous production of chlorine dioxide in a cascade reactor by the reaction of hydrochloric acid with alkali metal chlorate solution, which is obtained by means of an electrolysis plant from an alkali metal chloride-containing chlorate solution circulating in a process, together with cathodically formed hydrogen, with the passing in of air and reaction of the chlorine gas separated from the reaction product with the cathodically-formed hydrogen to give hydrochloric acid, characterised in that, on the outlet of the cascade reactor, one adjusts an underpressure of 0.2 to 0.3 bar and introduces chlorine gas directly into the hydrochloric acid synthesis for the formation of the required amount of hydrochloric acid.

2. Process according to claim 1, characterised in that into the cascade reactor one introduces an

air stream which corresponds to the 2.3 to 3.2 fold of the chlorine dioxide stream calculated as volume stream.

3. Process according to one of the preceding claims, characterised in that the air stream is fed into the cascade reactor wholly or partly with the flushing air sucked out of the chlorine dioxide storage containers.

4. Process according to one of the preceding claims, characterised in that the working pressure at the outlet of the cascade reactor is adjusted by regulation of the air introduced to the reactor.

5. Process according to one of the preceding claims, characterised in that one regulates the amount of chlorine to be fed into the hydrochloric acid synthesis in dependence upon the amount of chlorine dioxide removed from the chlorine dioxide production plant.

6. Device for the carrying-out of the process according to one of claims 1 to 5, containing at least one chlorate electrolysis plant (1), a cascade reactor (2), a separating column (3) and a hydrochloric acid synthesis furnace (4), which are connected with one another according to the carrying-out of the process, characterised by a valve (5) in the air inlet pipe of the reactor (2) which can be regulated according to the pressure on the product outlet of the reactor.

7. Device according to claim 6, characterised by a valve (8) in the inlet pipe for external chlorine to the synthesis furnace (4), which regulates the chlorine introduction in dependence upon the air current passed into the reactor (2).

8. Device according to claim 6 or 7, characterised in that the cascade reactor has 5 and 6 plates, the air inlet pipe is connected to the fourth plate and the outlet pipe for the air-containing product stream is situated above the first plate.

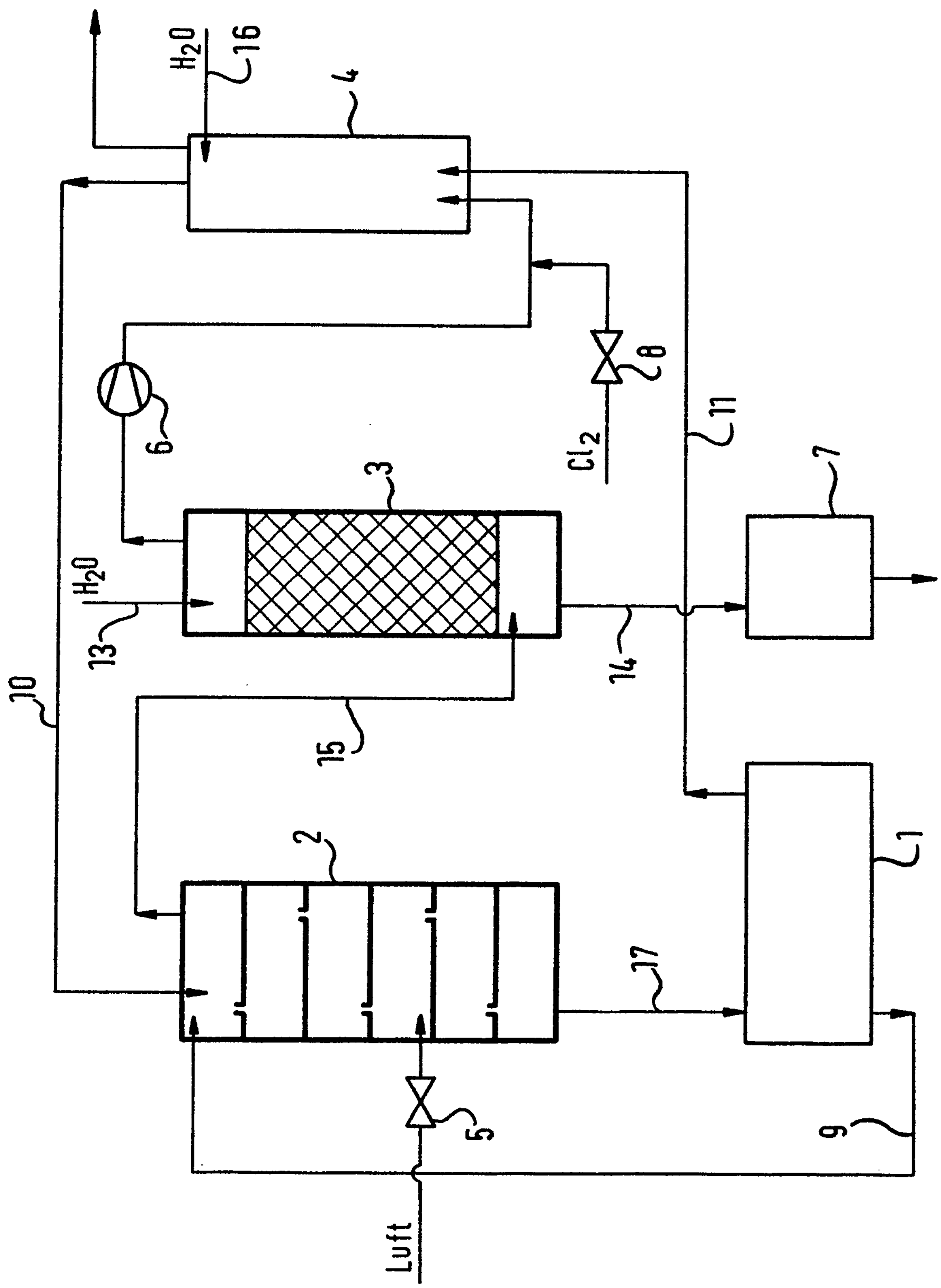
$H_2O$
16
4
$Cl_2$
8
11
6
3
7
$H_2O$
13
14
10
15
2
1
17
9
5
Luft